(19) **Europäisches Patentamt / European Patent Office / Office européen des brevets**

(11) **EP 1 733 606 B1**

(12) **EUROPÄISCHE PATENTSCHRIFT**

(45) Veröffentlichungstag und Bekanntmachung des Hinweises auf die Patenterteilung:
**01.09.2010 Patentblatt 2010/35**

(51) Int Cl.:
*A01D 43/08* *(2006.01)*    *A01D 63/00* *(2006.01)*

(21) Anmeldenummer: **06011880.9**

(22) Anmeldetag: **08.06.2006**

(54) **Verfahren und Vorrichtung zum Betreiben eines Vorsatzgerätes zum Ernten von stängeligem Erntegut**

Process and device to operate a header for harvesting stalk crops

Procédé et dispositif pour faire fonctionner un attachement pour la récolte de plantes à tiges

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **14.06.2005 DE 102005027586**

(43) Veröffentlichungstag der Anmeldung:
**20.12.2006 Patentblatt 2006/51**

(73) Patentinhaber: **CLAAS Saulgau GmbH 88348 Bad Saulgau (DE)**

(72) Erfinder: **Rauch, Hans 88348 Bad Saulgau (DE)**

(56) Entgegenhaltungen:
**DE-A1- 10 230 236    FR-A- 2 192 443**

## Beschreibung

Die Erfindung betrifft ein Verfahren und eine Vorrichtung zum Betreiben eines Vorsatzgerätes zum Ernten von stängeligem Erntegut nach dem Oberbegriff der unabhängigen Ansprüche 1 und 9.

## Stand der Technik

In Verbindung mit Feldhäckslern und deren Vorsatzgeräten sind Mäh- und Fördereinrichtungen zum Mähen von stängeligem Halmgut, wie beispielsweise Mais, mit um aufrechte Achsen umlaufende Mäh- und Förderwerkzeugen bekannt.

Gattungsbildende Ausführungsbeispiele für ein umlaufend angetriebenes Mäh- und Fördersystem von Vorsatzgeräten zum Ernten von stängeligem Erntegut sind beispielsweise aus der DE 196 39 805 und der DE 102 30 238 bekannt. Diese Art der Vorsatzgeräte werden von Feldhäckslern frontseitig aufgenommen und sie mähen die stängeligen Pflanzen bodennah ab und fördern sie in den Einzugsschacht des Häckslers.

Die in der DE 196 39 805 und DE 102 30 236 beschriebene Mäh- und Fördereinrichtung besteht aus quer zur Fahrtrichtung nebeneinander in einem Rahmengestell gelagerten Mäh- und Förderrotoren, deren Förderrototen Ausbuchtungen aufweisen, welche die abgemähten Stängel aufnehmen und auf einem Teilstück der Umlaufbahn halten und diese im hinteren Bereich wieder freigeben, damit sie an den Einzugsspalt des Häckslers weitergeleitet werden können.

Ein Mäh- und Förderrotor besteht aus einer unten liegenden Schneidscheibe und darüber liegend auf einer gemeinsamen Antriebswalze aus zwei In Abstand zueinander befindlichen Förderscheiben, die übereinanderliegende Ausbuchtungen aufweisen. Zur Unterstützung der Übergabe der abgemähten Maisstängel an die Förderschelben der Fördertrommeln sind den Mäh- und Förderratoren Stängelheber mit Stängelführungselemente n vorgelagert, welche die Maisstängel in die Ausbuchtungen hineindrängen.

Die FR 2 192 443 beschreibt ein motorcetriabenes landwirtschaftliches Fahrzeug, wie eine Traktor, Lastwagen, eine Erntemaschine. Dreschmaschine, oder spezielle Baumaschinen oder andere Maschinen die mit vorgelagerten schwenkbar montierten Spitzen versehen sind. Dabei geht es ausschließlich um die Verschwenkung von Spitzen in Abhängigkeit vom Richtungsantrieb relativ zum Maschinengestell,

## Aufgabenstellung

Mit zunehmenden Arbeitsbreiten der Vorsatzgeräte stellt sich in Kurvenfahrten die Situation ein, dass die Stängelheber, Führungsfinger und Halmteiler bei engeren Kurvenradien bei einem Richtungswechsel im Arbeitsbetrieb nicht mehr lotrecht zum Kurvenradius ausgerichtet sind und dadurch bedingt bei der Berührung der loch stehenden Pflanzen deren Stängel durch eine Querverschlebung umbiegen mit der Folge, dass der Stängel In geneigter Stellung schräg abgemäht wird und sich dadurch die Stoppellänge vergrößert, welches Erntegutverluste zur Folge hat. Soll dieses vermieden werden, so bedarf es dazu zeitaufwendiger Wendemanöver, meist mit schleifen oder Vorwärts und Rückwärtsfahrten verbunden. Dieses zu vermelden hat sich die Erfindung zur Aufgabe gesetzt. Identische Probleme treten bei Arbeiten In hängigem Gelände dann auf, wenn die sogenannte Hangdrift einsetzt, und sich das Trägerfahrzeugs den Hangabtriebskräften zur Folge schräg zur Fahrtrichtung stellt. Auch in diesem Fall neigen die den Bearbeltungewerkzeugen vorgelagerten schräg zur Fahrtrichtung stehenden Stängelführungselemente dazu, die Pflanzenstängel aus der aufrechten Position heraus zu verbiegen, welches dann zu größeren Stoppellängen führt. Die Aufgabe der Erfindung ist es daher, ein Verfahren und eine Vorrichtung zum Betreiben eines Vorsatzgerätes zum Ernten von stängeligem Erntegut mit großen Arbeitsbreiten dahingehend vorzuschlagen, dass auch in Kurvenfahrten bei großen Arbeitsbreiten eine gleichmäßige Stoppellänge erzielt wird, ohne dass der Emteprozess dabei unterbrochen werden muss. Zudem soll sich die Erfindung gleichermaßen bei Erntearbeiten am Hang zur Driftkompensation dahingehend eignen, dass damit ebenfalls gleichmäßige Stoppellängen zu erzielen sind wie in flachem Gelände. Die Erfindung soll somit beiden Anwendungsfällen, deren Mangelzustände ursächlich identisch sind, insofern gerecht werden, als das sie für beide Anwendungsfälle Lösungen in sich vereinigt.

## Lösung der Aufgabe

Gelöst wird die Aufgabe der Erfindung mit den kennzeichnenden Merkmalen der unabhängigen Ansprüche 1 bis 3. Weitere vorteilhafte Ausgestaltungen der Erfindung sind den abhängigen Ansprüchen, der Beschreibung und den Figurendarstellungen zu entnehmen.

Erfindungsgemäß wird die Aufgabe dadurch gelöst, indem die entsprechenden Stängelführungselemente , wie Stängelheber, Führungsfinger und Abteiler während der Kurvenfahrt hinsichtlich ihrer Ausrichtung in Bezug auf den Kurvenradiusautomatisch entsprechend nachkorrigiert werden. Der Vorteil der Erfindung besteht darin, dass dann die Stängelführungselemente auf dem ihnen zugeordneten Radiusvektor des jeweiligen Kurvenradius etwa oder näherungsweise lotrecht zu diesem ausgerichtet sind, was bedeutet, dass sie etwa tangential zu dem Umkreis, auf dem sich die Stängelführungselemente bewegen, ausgerichtet sind. Damit wird der schiebende Querversatz, welchen die den Mähscheiben in Fahrtrichtung vorgelagerten Stängelführungselemente auf die Stängel infolge des Ausschwenkens ausüben, entweder völlig vermieden, oder zumindest näherungsweise und damit in einer akzeptablen Weise unterdrückt.

Diese Ausrichtungsänderungen der Stängelführungselemente sind Schwenkbewegungen und sie erfolgen um eine oder mehrere aufrechte Drehachsen relativ zum Trägerfahrzeug. Diese Schwenkbewegungen sind definiert durch den Schwenkwinkel um eben diese Schwenkachse. Die Größe der Schwenkbewegung ist durch den Anstellwinkels gekennzeichnet, und er ist abhängig vom Betrag des Kurvenradius, der momentan durchfahren wird. Alternativ kann der Anstellwinkel auch direkt aus dem Lenkwinkel der Fahrzeuglenkung des Trägerfahrzeugs abgeleitet werden.

Im Idealfall kann jedes der Stängelführungselemente separat und unabhängig vom jeweils anderen um seine jeweils eigene aufrechte Schwenkachse verschwenkt werden, aber ebenso ist es aber auch erfindungsgemäß möglich, dass das gesamte Vorsatzgerät relativ zum Trägerfahrzeug verschwenkt werden kann, so dass alle Stängelführungselemente eines Vorsatzgerätes um eine gemeinsame aufrechte Schwenkachse verschwenkt werden. Ist letzteres der Fall, so handelt es sich um eine gemittelte Korrektur des Anstellwinkels, welches in der Praxis hinreichend gute Ergebnisse liefert. Erfindungsgemäß ist es aber auch möglich, den oder die Anstellwinkel eines Führungselements durch eine Kombination von Schwenkbewegungen derart herbeizuführen, dass einerseits das gesamte Vorsatzgerät relativ zum Trägerfahrzeug um einen Teilanstellwinkel verschwenkt wird und andererseits die Stängelführungselemente einzeln oder in Gruppen um einen weitern Teilanstellwinkel verschwenkt werden. Eine Gruppe von Stängelführungsfingern als Stängelführungselemente kann beispielsweise auf einem gemeinsamen Sockel eines einzigen Mäh- und Förderrotor angeordnet sein, so das der Sockel als solcher mit samt den Führungselemente verschwenkt werden kann. Die Summe beider Teilanstellwinkel ergibt wiederum den Anstellwinkel des jeweiligen Stängelführungselemente s in der jeweiligen Kurvenfahrt.

Der Anstellwinkel selber wird ermittelt aus dem Einschlagwinkel der Lenkräder des Trägerfahrzeugs, wie dieses dem Fachmann beispielsweise aus der technischen Lehre der Lenkautomaten von Trägerfahrzeugen bei Feldhäckslern oder Mähdreschern durchaus bekannt ist. Der Wert als Argument dieses Einschlagwinkels wird einem Mikroprozessor als Eingangssignal zugeführt, aus dem dann der oder die Anstellwinkel der Stängelführungselemente errechnet werden und als entsprechendes Ausgangssignal einem oder mehreren Aktoren zugeführt werden, die dann den Schwenkvorgang der Stängelführungselemente um einen entsprechenden Anstellwinkel veranlassen. Ein Aktor kann beispielsweise ein hydraulisch oder auch elektrisch betätigter Schwenkantrieb sein und in besonders vorteilhafter Weise der Einfachheit halber ein Hydraulikzylinder sein.

Dabei kann es von Vorteil sein, wenn wenigstens ein Aktor ebenfalls mit einem Sensor ausgestattet ist, der Rückschlüsse über den Zustand des Anstellwinkels der Stängelführungselemente liefert, wobei auch dieser Wert einem Mikroprozessor als Eingangssignal zugeführt wird. Somit kann die Verstellung des oder der Anstellwinkel der Stängelführungselemente im Sinne eines Regelkreises dem Lenkautomaten des Trägerfahrzeuges aktiv zugeordnet werden.

In der anschließenden Geradeausfahrt wird dann somit der Schwenkvorgang der Stängelführungselemente wieder neutralisiert, d.h. werden die Anstellwinkel wieder auf den Wert Null zurück gesetzt.

Der besondere Vorteil der Erfindung besteht somit darin dass wenigstens eine Stängelführungselement als Leitelement in Abhängigkeit der Lage oder der Position des Vorsatzgerätes relativ zum Trägerfahrzeug verschwenkbar ist und dass somit wenigstens ein Stängelführungselement des Vorsatzgerätes infolge einer Fahrtrichtungsänderung des Vorsatzgerätes und bzw. oder des Trägerfahrzeugs eine relative Verdrehung um einen Drehpol im Sinne einer Verdrehung bzw. Verschwenkung um den Betrag eines Anstellwinkels ausführen kann. Dabei kann auch aber auch das gesamte Vorsatzgerät oder auch Teile des Vorsatzgerätes an der Verschwenkung teilnehmen.

**Ausführungsbeispiel**

Nachfolgend wird die Erfindung an verschieden Ausführungsbeispielen eingehender erläutert.

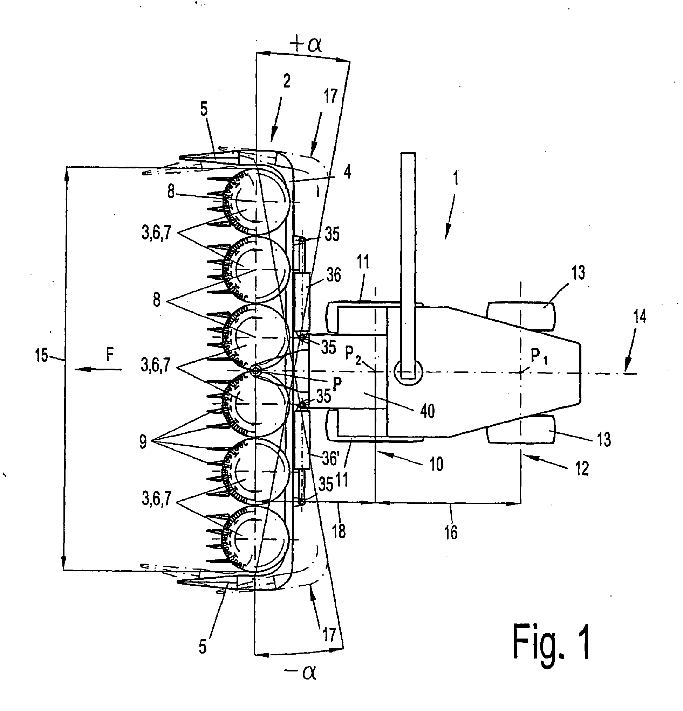

Fig.1 zeigt eine selbstfahrende Erntemaschine nach der Erfindung in einer Draufsicht, bestehend aus einem Trägerfahrzeug 1, ausgeführt als Feldhäcksler mit einem an sich bekannten Vorsatzgerät 2 (Maisgebiss) zum Ernten der ganzen Maispflanzen, die nach dem Abmähen und dem Weitertransport dem Einzugsspalt zugeführt und von den Einzugswalzen eingezogen und somit der Häckseltrommel zugeführt werden. Das Vorsatzgerät besteht aus einem Maschinengestell 4 mit den um aufrechte Rotationsachsen 8 unlaufend angetriebenen Mäh- und Förderrotoren 3 mit deren koaxial zur Rotationsachse 8 angeordneten und übereinanderliegenden Messer- und Förderscheiben 6,7, die in dem Maschinengestell 4 gelagert sind. Nach außen begrenzt ist das Vorsatzgerät durch Abteiler 5, die teils vor und teils neben den außenliegenden Mäh- und Förderrotoren liegen und die gleichzeitig die dazwischen liegende Mäh- und Arbeitsbreite 15 begrenzen. Den einzelnen Mäh- und Förderrotoren 3 vorgelagert sind Führungsfinger 9, welche die abzumähenden Pflanzenstängel in die Fördertaschen der Förderscheiben geleiten und in diese hineindrängen. Somit übernehmen die Abteiler 5 und die Führungsfinger 9 eine Funktion als Stängelführungselemente. Zu den Führungselementen dieser Art zählen z.B. auch Lagermaisschnecken oder Teilerspitzen z.B. an Pflückvorsatzgeräten.

Trägerfahrzeuge 1 dieser selbstfahrenden Art, wie in diesem Beispiel dargestellt, haben meistens eine starre Vorderachse 10, deren Vorderräder 11 angetrieben sind, und einer mit dem Achsabstand 16 hinter der Vorderachse 10 liegenden lenkbaren Hinterachse 12 mit lenkbaren Hinterrädern 13. Der Führerstand des Trägerfahrzeugs ist in der Fahrerkabine 40 untergebracht.

Das Vorsatzgerät 2 ist dabei so mit dem Trägerfahrzeug 1 gekoppelt, dass es um einen Drehpol P in Kurvenfahrten Schwenkbewegungen um einen Anstellwinkel $+\alpha$ bzw. $-\alpha$ relativ zum Trägerfahrzeug bzw. relativ zur vertikalen Längsmittelebene 14 ausführen kann, welches durch Konturlinien 17 des verschwenkten Vorsatzgerätes 2 gekennzeichnet ist. Der Drehpol P liegt dabei mit einem Abstand 18 vor der Vorderachse 10.

Dargestellt ist das Vorsatzgerät in Fig.1 in der Geradeausfahrt mit der Fahrtrichtung F. Die Hinterachse 12 schneidet die vertikale Längsmittelebene 14 des Trägerfahrzeugs 1 im Punkt $P_1$ und Vorderachse 10 schneidet die vertikale Längsmittelebene des Trägerfahrzeugs im Punkt $P_2$.

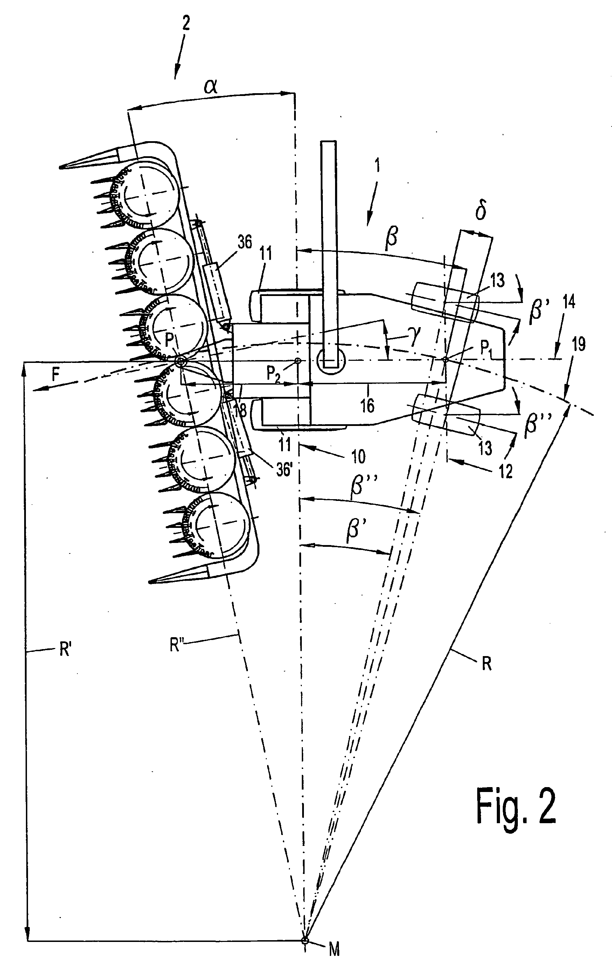

Fig.2 zeigt das Erntegerät als selbstfahrende Einheit bestehend aus dem Trägerfahrzeug 1 und dem Vorsatzgerät 2 in einer Kurvenfahrt mit eingeschlagenen Hinterrädern 13 als Lenkräder. Prinzipiell können aber auch die Vorderräder oder alertnativ auch beide Achsen, d.h. sowohl Hinter- und Vorderräder lenkbar sein.

Bedingt durch die Kurvenfahrt, dargestellt ist eine Linkskurvenfahrt, bewegt sich das Trägerfahrzeug 1 um den Momentanpol M mit dem Kurvenradius R. Somit bewegt sich auch das Vorsatzgerät 2 um den Momentanpol M mit dem Kurvenradius R.

Um dabei die Schrägstellung der Stängelführungseiemente, Abteiler 5 und Führungsfinger 9, durch die Ausschwenkbewegung des Vorsatzgerätes 2 in Bezug auf die Fahrtrichtung F auszugleichen, und um damit den unerwünschten Querschub auf die Pflanzenstängel zu vermeiden, ist das Vorsatzgerät 2 um eine aufrechte Drehachse, die durch den Drehpol P verläuft, um den Anstellwinkel $\alpha$ gegenüber seiner Ausgangslage in Geradeausfahrt verschwenkt. Dadurch ist die Längserstreckung der Stängelführungselemente, Abteiler 5 und Führungsfinger 9, in Bezug auf die Fahrtrichtung F nunmehr durch den Schwenkvorgang mit dem Anstellwinkel $\alpha$ etwa senkrecht zum Radius R" ausgerichtet, der ausgehend vom Momentanpol M durch den Drehpol P hindurch verläuft.

Der erforderliche Anstellwinkel $\alpha$ lässt sich aus den Radeinschlägen mit den Einschlagwinkeln $\beta', \beta''$, die von Winkelsensoren des Trägerfahrzeugs 1 messtechnisch erfasst werden ableiten, wobei bedingt durch unterschiedlich große Kurvenradien, auf denen die Hinterräder 13 laufen, diese eine Winkeldifferenz $\delta$ zueinander einnehmen. Der arithmetische Mittelwert von $\beta'$ und $\beta''$ ergibt den Winkel $\beta$, den die Vorderachse 10 und der Momentanpolradius R, der Punkt P1 schneidet, einschließen. Der Ursprung des Momentanpolradius R ist der Momentanpol M, wobei der Radiusvektor R um Momentanpol M einen Kreisbogen 19 beschreibt, der die Hinterachse 12 und die vertikale Längsmittelebene 14 in dem Punkt $P_1$ schneidet. Der Momentanpol M liegt dabei etwa auf der Verlängerung der Vorderachse 10.

Da der Momentanpol M liegt also mit hinreichender Näherung auf der Vorderachse 10 und die momentane Lage des Momentanpols P ist daher mit ebenfalls hinreichender Näherung unter Zugrundelegung des rechtwinkligen Dreiecks mit den Dreieckspunkten M,P1,P2, mit dem nunmehr bekannten Winkel $\beta$ und dem Achsabstand 16 wie folgt berechnen, indem der Radiusvektor R errechnet werden kann nach der Beziehung:

$$\sin \beta = \text{Achsabstand 16} \ / \ \text{Momentanpolradius R}$$

bzw.

$$\text{Momentanpolradius R} = \text{Achsabstand 16} \ / \ \sin \beta$$

und damit

$$\cos \beta = R' \ / \ R$$

bzw.
und damit

$$R' = R \cdot \cos \beta$$

Mit dem konstruktiv festgelegten Abstand 18 des Drehpols P von der Vorderachse 10 lässt sich der erforderliche Anstellwinkel $\alpha$ wie folgt berechnen:

$$\tan \alpha = \text{Abstand } 18 \ / \ R'$$

bzw.

$$\alpha = \arctan (\text{Abstand } 18 \ / \ R')$$

Damit erfährt der Drehpol P ein Fahrtrichtungsänderung gegenüber der Geradeausfahrt um den Fahrtrichtungswinkel $\gamma$, der dem Betrage nach etwa und hinreichend identisch ist mit dem Einschlagwinkel $\alpha$.

Je nach dem, in welchem Quadranten die Einschlagwinkel $\beta', \beta''$ liegen, nimmt der Winkel $\alpha$ einen positiven oder negativen Wert an.

Daraus folgt, dass der Anstellwinkel $\alpha$ dann zu Null verschwindet, wenn der Abstand 18 ebenfalls zu Null verschwindet, welches aber aus Kostengründen nicht möglich ist. Es erweist sich daher als besonders günstig, den Abstand 18 des Drehpols so zu bemessen, dass er innerhalb des Bereichs 500 bis 2500, vorzugsweise etwa bei 1500 liegt. Der Drehpol P ist nicht notwendiger Weise an eine feste materielle Achse gebunden, er kann aus ein virtuelle Achse beispielsweise resultierend aus einem Koppelgetriebe hervorgehen, wenn das Vorsatzgerät 2 mittels Koppellenkem mit dem Trägerfahrzeug 1 verbunden ist. In diesem Fall kann der Drehpol P auch in Fahrtrichtung F vor aber auch hinter dem Vorsatzgerät 2 liegen.

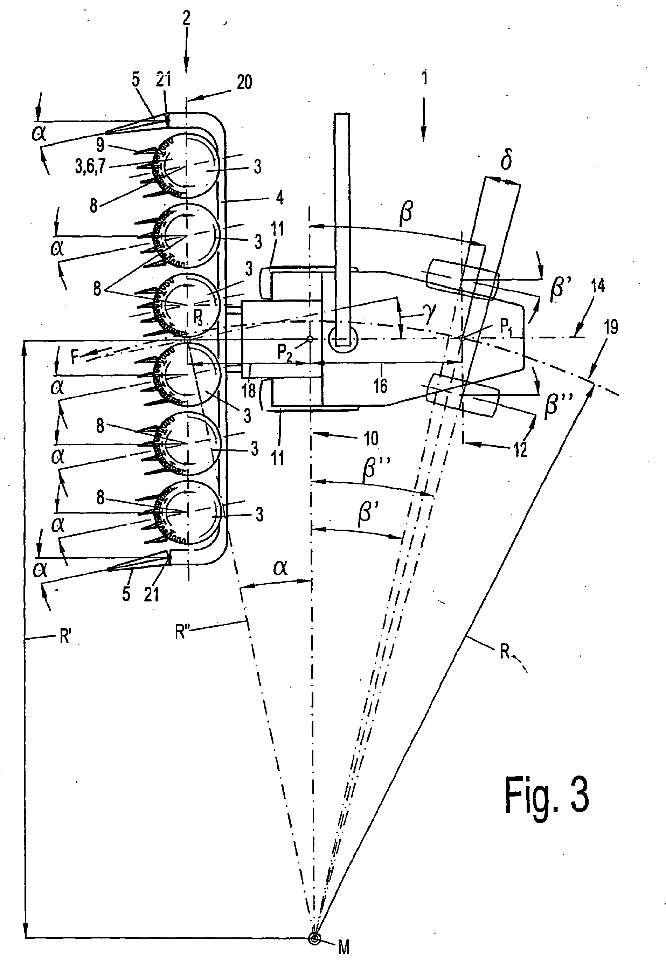

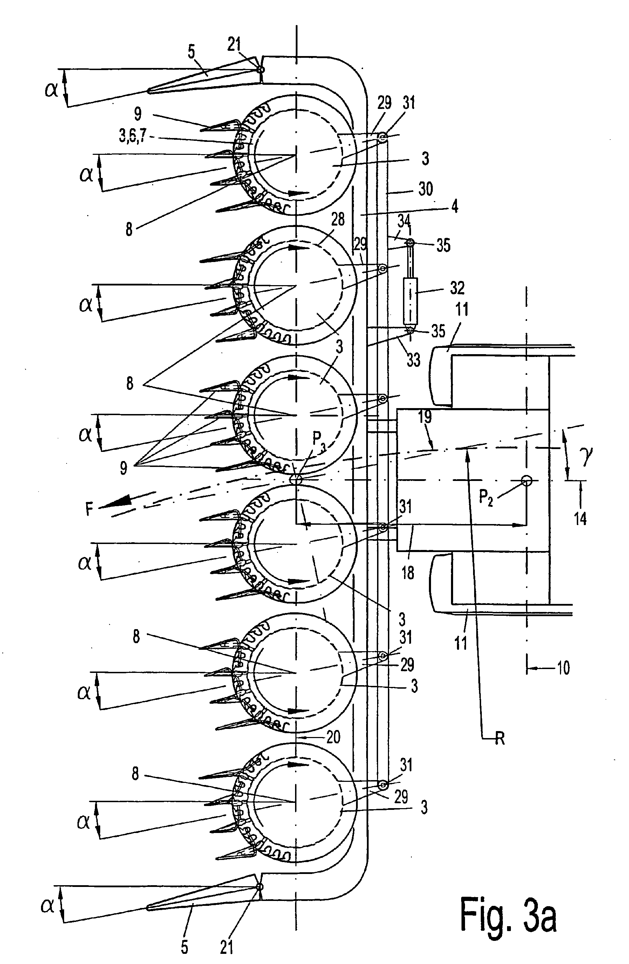

Fig.3 zeigt ein weiteres Ausführungsbeispiel nach der Erfindung. Im Unterschied zum Ausführungsbeispiel gemäß Fig.2 wird nicht das ganze Vorsatzgerät 2 um einen gemeinsamen Drehpol P in einer Kurvenfahrt relativ zur vertikalen Längsmittelebene 14 verschwenkt, sondern es werden lediglich die einzelnen Stängelführungselemente, Führungsfinger 9 und Abteiler 5 um einen jeweils eigenen diesen zugeordneten Drehpol relativ zum Trägerfahrzeug 1 verschwenkt. Analog Fig.2 ist der Drehpol P in Fig.3 als virtueller Drehpunkt P3 definiert, der ebenfalls mit dem Abstand 18 vor der Vorderachse 10 liegt, und der vorzugsweise auf der vertikalen Längsmittelebene 14 liegt. Der Punkt $P_3$ ist durch den Schnittpunkt der Verbindungsgerade 20, auf der die Rotationsachsen 8 der Mäh und Förderrotore 3 liegen, mit der vertikalen Längsmittelebenen 14 definiert.

Anlog zur Figurenbeschreibung gemäß Fig.2 bestimmt nun das Dreieck mit den Dreieckspunkten M,P2,P3 den mittleren Anstellwinkel $\alpha$, um den nunmehr jedoch lediglich die Stängelführungselemente , Abteiler 5 und Führungsfinger 9, um den Anstellwinkel $\alpha$ verschwenkt werden. Die Führungsfinger 5 der Gruppe, die einem Mäh- und Förderrotor 3 zugeordnet sind, sind beispielsweise an einem Drehkranz befestigt, der um die jeweilige Rotationsachse 8 unterhalb der jeweiligen Mäh und Förderrotore 3 verdrehbar gelagert ist, und der dann mittels eines geeigneten Stellantriebs um den Anstellwinkel $+\alpha,-\alpha$ verschwenkt werden kann. Auch die Abteiler 5 können um eine aufrechte Scharnierachse 21 mittels geeigneter nicht dargestellter Stellantriebe um den Anstellwinkel $+\alpha,-\alpha$ verdreht werden. Der jeweilige Drehpol, um den die Führungsfinger 9 einer Gruppe eines Mäh- und Förderrotors 3 verschwenkt werden ist in diesem Ausführungsbeispiel in besonders vorteilhafter weise die Rotationsachse 8 einer Mäh und Fördereinheit 3.

Fig.3a zeigt einen vergrößerten Ausschnitt aus Fig.3 und zusätzlich einen vereinfacht dargestellten Koppelmechanismus zur Richtungsverstellung der Führungsfinger 9 um den Anstellwinkel $\alpha$. Die Führungsfinger 9 sind an einem Drehkranz 28 befestigt, der unterhalb der Mäh- und Förderscheiben 3 gelagert ist. An dem Drehkranz 28 angeschlagen ist ein Hebel 29, der radial nach außen weist und an dessen Ende sich eine Gelenkpunkt 31 befindet. Sämtliche Gelenkpunkte 31 sind mit einer Schubstange 30 verbunden. Die Schubstange 30 kann von einem Hydraulikzylinder als Stellantrieb 32 betätigt werden, wobei der Stellantrieb 32 in den Gelenkpunkten 35 eingespannt ist und sich zum einen an dem Maschinengestell 4 an der Konsole 33 und zum anderen an dem Hebel 34 der Schubstange 30 abstützt. Der Stellantrieb 32 kann beispielsweise mit einem Wegaufnehmer als Anstellwinkelsensor gekoppelt sein, der seine momentane Lage in Form eines Eingangssignals einem Mikroprozessor an Bord des Trägerfahrzeugs mitteilt. Der Mikroprozessor kann dabei im Sinne eines Regelkreises eine Ausgangssignal an einen Aktor weiterleiten, der den Stellantrieb 32 so steuert, dass sich der momentan errechnete Anstellwinkel $\alpha$ an den Stängelführungselemente 9,5 einstellt. In dem dargestellten Ausführungsbeispiel bilden die vier Führungsfinger 9 eines Mäh- und Förderrotors 3 eine Gruppe von Führungsfingem, die mit dem Drehkranz 28 eine Einheit bilden, so dass diese gemeinsam an einem Schwenkvorgang mit dem Anstellwinkel α teilnehmen. Grundsätzlich kann auch der Schwenkvorgang der Abteiler 5 an dem Koppelmechanismus angeschlossen werden, wobei es andererseits aber auch durchaus möglich ist, diesen einem separaten Stellantrieb zuzuordnen.

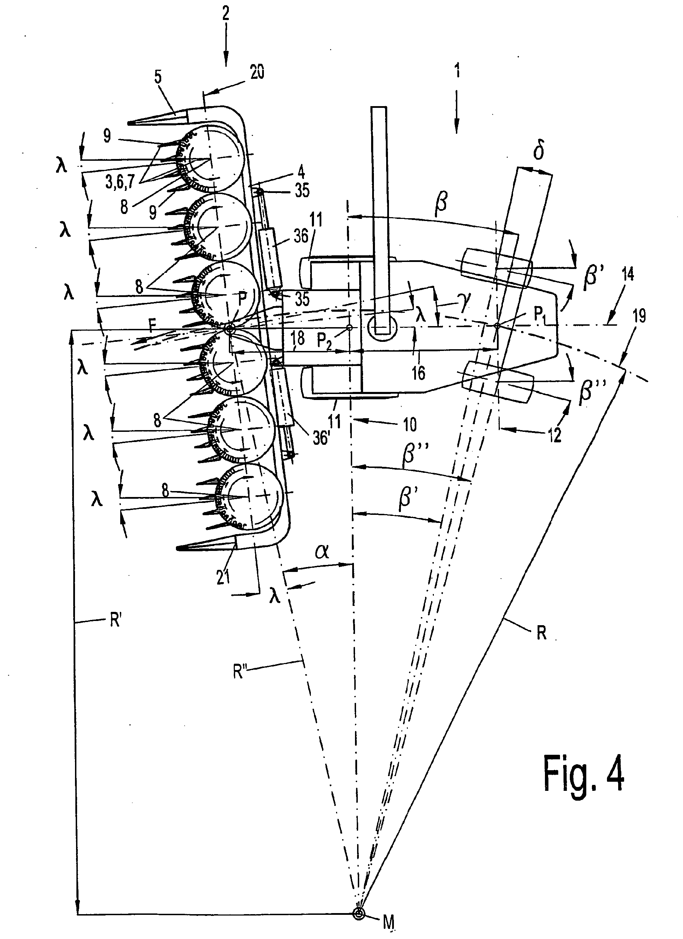

Fig.4 zeigt ein weiteres Ausführungsbeispiel nach der Erfindung. Es handelt sich hierbei im Wesentlichen um eine Kombination der Merkmale der Ausführungsbeispiele gemäß Fig.2 und Fig.3. In diesem Ausführungsbeispiel wird das Vorsatzgerät 2 lediglich um einen Teil des Schwenkwinkels α, nämlich um einen Anstellwinkel λ relativ zum Trägerfahrzeug 1 verschwenkt, wobei die Stängelführungselemente, und insbesondere in diesem Anwendungsbeispiel die Führungsfinger 9 ebenfalls um den Anstellwinkel λ relativ zum Maschinengestell 4 verschwenkt werden. In besonders vorteilhafter Weise wird dem Anstellwinkel λ die Hälfte des Betrags des Anstellwinkels α zugeordnet. Als besonders vorteilhaft bei diesem Verfahren der Kurvensteuerung kann es angesehen werden, dass sich die Verschwenkwinkel λ, der des Vorsatzgerätes 2 um den Drehpol P und der Führungsfinger 9 um die Rotationsachse 8 halbieren, wobei auf die Verschwenkung der Abteiler sogar verzichtet werden kann, weil der Ausrichtungsfehler der Abteiler 5 in der Praxis dann vernachlässigbar gering sein kann.

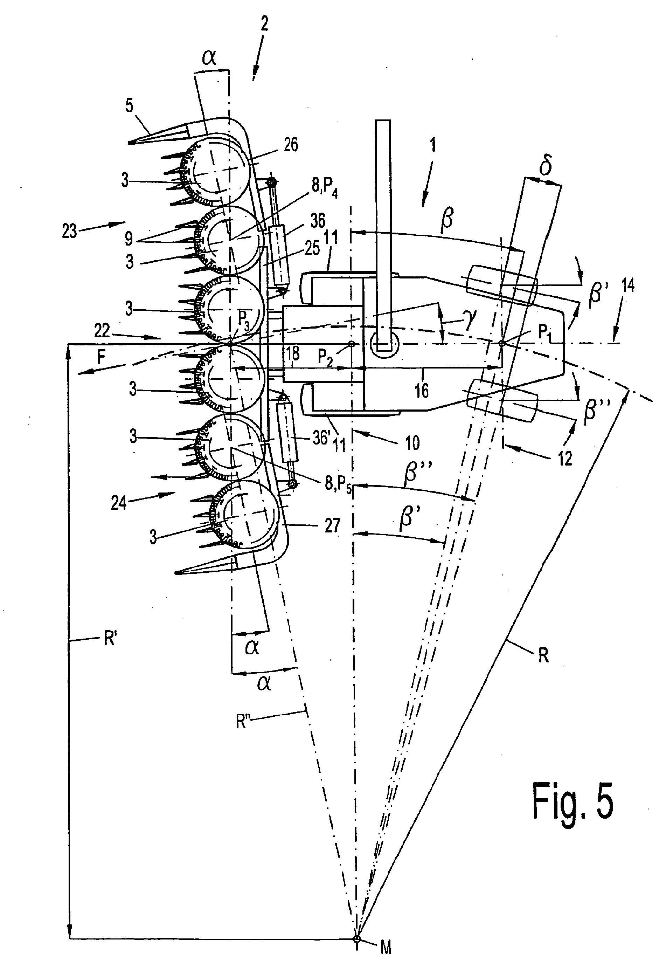

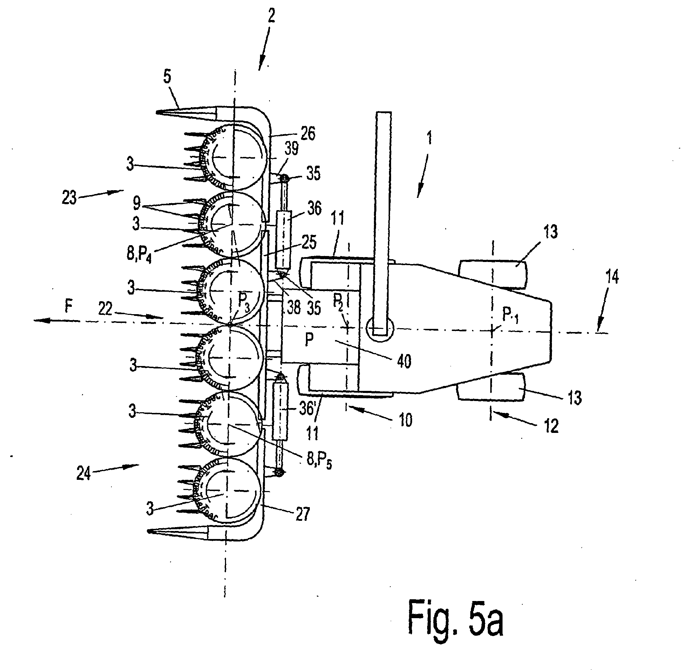

Fig.5 und Fig.5a zeigen ein weiteres Ausführungsbeispiel nach der Erfindung. In diesem Ausführungsbeispiel ist der Mittelteil 22 des Vorsatzgerätes 2 quasi starr, d.h. nicht um eine aufrechte Achse mit dem Trägerfahrzeug verschwenkbar gekoppelt, wodurch auch das Verschwenken der Führungsfinger 8 der Mäh- und Förderscheiben 3 des Mittelteils ebenfalls entbehrlich ist. Statt dessen werden in der Kurvenfahrt lediglich die äußeren Abschnitte 23,24 des Vorsatzgerätes 2 um den Einschlagwinkel α verschwenkt. Dazu ist es erforderlich auch den Maschinenrahmen 4 in einen Mittelteil 25 und zwei weitere Außenteile 26,27 aufzuspalten, in denen dann die zugehörigen Mäh- und Förderrotore 3 umlaufend angetrieben gelagert sind. In der Kurvenfahrt werden die äußeren Abschnitte 23,24 des Vorsatzgerätes um die Drehpole P3 bzw P4 um den Anstellwinkel α verschwenkt, welcher nach den zuvor dargelegten Kriterien ermittelt und errechnet werden kann.

Vorteilhafter Weise sind die Drehpole P3 bzw P4 der äußeren Abschnitte 23,24 des Vorsatzgerätes identisch mit den Rotationsachsen 8 der im Mittelteil 22 des Vorsatzgerätes 2 außen liegenden Mäh- und Förderscheiben 3. Gleichzeitig mit dem Verschwenken der Abschnitte 23,24 des Vorsatzgerätes 2 bzw. der Außenteile 26,27 des Maschinenrahmens 4 um besagte Drehpole P4,P5 verschwenken die Stängelführungselemente , Führungsfinger 9 und Abteiler 5 um den Anstellwinkel α mit. In der Geradeausfahrt, wie in Fig. 5a dargestellt, verschwenken die Abschnitte 23,24 in ihre Grundstellung zurück, so dass der Betrag des Winkels α zu Null verschwindet. Besonders vorteilhaft ist die erfinderische Lösung gemäß Fig.5 bzw. Fig.5a deshalb, weil der Mittelteil 22 des Vorsatzgerätes gegenüber bekannten Vorsatzgeräten keinerlei konstruktiver Änderungen bedarf, was die Ausgestaltung der Übergabe der Maispflanzen an den Einzugsspalt des Einzugsgehäuses des Trägerfahrzeugs 1 anbetrifft. Auch die Stellantriebe 36,36' als Schwenkantriebe zur Verschwenkung der beiden äußeren Abschnitte 23,24 um eben den Anstellwinkel α in der Kurvenfahrt lassen sich auf besonders einfache Art durch Hydraulikzylinder mit Gleichgangsteuerung realisieren, so dass die beiden äußeren Abschnitte 23,24 des Vorsatzgerätes 2 zwangsläufig jeweils um den gleichen Betrag des Anstellwinkels α verschwenken. Die Stellantriebe 36,36' sind dabei zum einen in dem Gelenkpunkt 35 der Konsole 38 am Maschinenrahmen Mittelteil 25 und zum anderen in dem Gelenkpunkt 35 des Hebels 39 am jeweiligen verschwenkbaren Teil des Maschinengestell als Außenteil 26,27 angeschlagen.

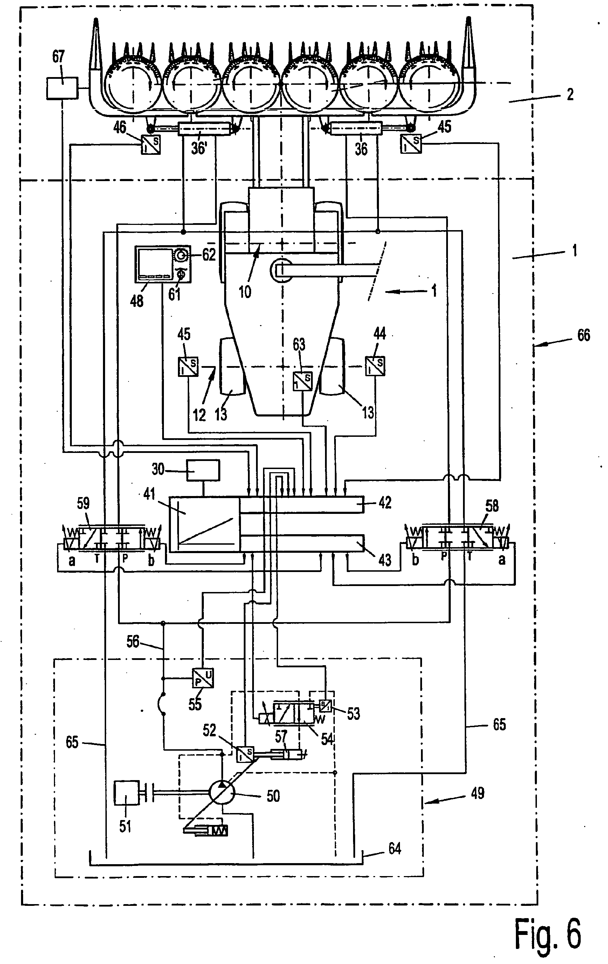

Fig.6 zeigt anhand des Ausführungsbeispiels gemäß Fig. 5 bzw Fig.5a das Grundsätzliche einer erfindungsgemäßen Kurvensteuerung zur Ansteuerung der Stellantriebe zum Verschwenken der Stängelführungselemente eines Vorsatzgerätes 2 nach der Erfindung.

Der Steuerstand des Fahrers des Trägerfahrzeugs 1 befindet sich in der Fahrerkabine 40. In der Fahrerkabine 40 befindet sich ein Terminal 48 mit einem Betriebsartenwahlschalter 61, mit dem die Steuerung auf Automatiksteuerung oder auf Handsteuerung voreingestellt werden kann.

Im Automatikbetrieb werden die Einschlagwinkel β' und β'' von den Einschlagwinkelsensoren 44 und 45 erfasst als Eingangssignale dem Eingang 42 des Mikroprozessors 41 zugeführt. Gleichzeitig liegen ebenfalls am Eingang 42 des Mikroprozessors 41 die Eingangssignale der Anstellwinkelsensoren 45 und 46 an, die den Istzustand der Anstellwinkel α erfassen. In einem RAM-Speicher 60 ist die Software für das Betreiben der Mikroprozessorsteuerung für die Kurvenfahrtsteuerung des Vorsatzgerätes hinterlegt. Für die Übertragung der Steuersignale ist eine Datenbus, z.B. eine ISO-Bus vorgesehen. Angesteuert werden die Stellantriebe 36,36', ausgeführt als Gleichgangzylinder, von den Proportional - Wegeventilen 58,59.

Das Hydraulikaggregat 49 befindet sich an Bord des Trägerfahrzeugs 1 und es steht antriebsseitig in Wirkverbindung mit der Verbrennungskraftmaschine des Trägerfahrzeugs 1 als Antriebsmotor 51. Zur Minimierung der Energieverluste einerseits und insbesondere zum Zweck der hochdynamischen Regelung der Kurvensteuerung anderseits ist die Hydraulikpumpe 50 als Load-Sensing-Pumpe sowohl druck- als auch förderstromgeregelt ausgeführt.

Gesteuert wird die Hydraulikpumpe 50 über ein Steuerventil 54 auf der Basis der Datenerfassung eines Drucksensors 55, eines Förderstromsensors 53 und eines Schwenkwinkelsensors 52, und auch in Abhängigkeit von der Fahrgeschwindigkeit des Trägerfahrzeugs 1, welche von dem Drehzahlsensor 63 erfasst wird, sowie von der Winkelbeschleunigung der Verstellgeschwindigkeit der Einschlagswinkel β'β'', welche von den Einschlagwinkelsensoren 44,45 erfasst wird. Diese Signale liegen als Eingangsignale am Eingang 42 des Mikroprozessors 41 an. Auf der Basis dieser Eingangssignale ermittelt der Mikroprozessor 1 den momentan erforderlichen Förderstrom und den erforderlichen hydrostatischen Druck, den die Hydraulikpumpe dem Hydrauliksystem zur Verfügung stellen muss, damit der Steuerungsvorgang der Dynamik der Kurvensteuerung folgen kann.

Am Ausgang 42 des Mikroprozessors steht somit ein Signal zur Ansteuerung des Steuerventils 54 an, wobei das Steuerventil wiederum den Stellantrieb 57 der Hydraulikpumpe 50 als Aktor betätigt.

Die Druckleitung 56 führt zu den 4/3-Wegeventilen 58,59, welche die Stellzylinder 36,36', basierend auf den messtechnisch erfassten Einschlagwinkein β'β'' durch die Einschlagwinkelsensoren 44,45 druckseitig beaufschlagen. Druckseitig beaufschlagt wird im Falle der Betätigung der Stellzylinder 36,36' stets nur einer der beiden Stellzylinder 36 oder 36', in dem stets eines der beiden 4/3-Wegeventile 58 oder 59 b-seitig angesteuert wird, während das jeweils andere Wegeventil 58 oder 59 gleichzeitig a-seitig angesteuert wird. Die jeweils verdrängte Ölsäule des angesteuerten Stellzylinders 36 oder 36' beaufschlagt dabei gleichzeitig den jeweils anderen Stellzylinder 36 oder 36' mit der Folge, dass wenn die Kolbenstange des einen Stellzylinders, z.B. des Stellzylinders 36 von dem Wegeventil 58 druckbeaufschlagt wird, diese aus dem Zylindergehäuse ausführt, wohingegen die Kolbenstange des korrespondierenden Stellzylinders 36' in dessen Zylindergehäuse einführt. Die verdrängte Ölsäule des Stellzylinders 36' kann dann über das a-seitig angesteuerte Wegeventil 59 über die Tankrücklaufleitung 65 in den Öltank 64 des Hydraulikaggregats 49 zurück strömen.

Die logischen Verknüpfungen dieses Steuerungsvorgangs sind Teil der im RAM-Speicher hinterlegten Software, wobei die logische Auswertung und deren Befehlsausgabe von dem Mikroprozessor 41 vorgenommen wird. Dazu zählt auch die Auswertung der Steuerlogik basierend auf die +/-Vorzeichen der gelieferten Datensituation der Einschlagwinkelsensoren 44,45 an den Eingang 42, welche darüber entscheiden, ob es sich dabei um eine Links- oder um eine Rechtskurve handelt und welche die entsprechende Steuerlogik aktiviert. Diese entscheidet auch darüber, ob das Wegeventil 58 b-seitig angesteuert wird, welches einer Linkskurve entspricht und in dessen Folge das Wegeventil 59 a-seitig angesteuert wird, oder ob im Falle einer Rechtskurve das Wegeventil 59 b-seitig angesteuert und das Wegeventil 58 a-seitig angesteuert wird, welches einer Rechtskurve entspricht.

In der Geradeausfahrt befinden sich beide Kolbenstangen der Stellantriebe 36,36' in der Mittelstellung, wobei auch die 4/3-Wegeventile 58,59 in der Mittelstellung als Sperrstellung verharren. Erforderlich ist in diesem Zusammenhang auch eine nicht näher dargestellte Leckölkompensation mit Mittellagen-Nullabgleich, damit die Stellzylinder 36,36' durch Leckölverluste an den Dichtungen der Kolbenstangen in der Geradeausfahrt ihre Mittestellungen nicht verlieren können.

Die momentane Lage der Kolbenstangen der Stellantriebe 36,36' wird von den Einschlagwinkelsensoren 45,46 messtechnisch erfasst und die Signale werden dem Eingang des Mikroprozessors zugeführt. Die Steuerung des Vorsatzgerätes im Sinne der Ausrichtung der Stängelführungselemente, wie Führungsfinger 9 und Abteiler 5 usw., basiert somit auf einem automatischen Mikroprozessor 41 gesteuerten Regelkreislauf.

Alternativ sieht die Erfindung jedoch auch den Modus Handsteuerung vor, welcher durch den Betriebsartenwahlschalter 61 vorgewählt werden kann. Beispielsweise kann mittels eines Drehpotentiometers 62 dann ein Anstellwinkel +/- $\alpha$ vorgewählt werden, der dann unabhängig von einer Kurven oder Geradeausfahrt konstant beibehalten wird. Diese ist besonders in hängigem Gelände von Vorteil zur Kompensation der Hangdrift der gesamten Erntemaschine bestehend aus Trägerfahrzeug 1 und Vorsatzgerät 2. Somit können die Stängelführungselemente dann durch einen entsprechend eingestellten Anstellwinkel +/- $\alpha$ auf den richtigen Kurs eingestellt werden.

Die Steuerungskomponenten der vorbeschriebenen Lenksteuerung können vollständig oder auch nur teilweise an Borde des Trägerfahrzeugs 1 untergebracht sein, aber ebenso auch Teil des Vorsatzgerätes 2 sein. Auch ist es durchaus möglich, dass ein Jobrechner Teil des Vorsatzgerätes 2 ist und der somit auch ein Teil der Lenksteuerungskomponenten ist, wobei dieser seine Daten an einen Mikroprozessor 41 des Trägerfahrzeugs über ein Bussystem überträgt bzw. auch von dem Mikroprozessor empfängt, bzw. dass beide informationsseitig miteinander kommunizieren. Das Bussystem kann z.B. ein ISO-Datenbus sein.

Die dargestellten Ausführungsbeispiele beziehen sich auf die Kombination Feldhäcksler als Trägerfahrzeug 1 und Vorsatzgerät 2 als Maisgebiss. Analog ist die Erfindung aber auch in Verbindung mit anderen Vorsatzgeräten wie z.B.

Maispflücker in Verbindung auch mit anderen Trägerfahrzeugen 1 wie beispielsweise auch Mähdrescher anwendbar.

Somit können Stängelführungselemente dieser Art nicht nur Führungsfinger 9 oder Abteiler 5, sondern gleichermaßen Lagermaisschnecken oder auch Teilerspitzen sein.

**Bezugszeichenliste**

| 1 | Trägerfahrzeug (Feldhäcksler) |

| | |
|---|---|
| 2 | Vorsatzgerät |
| 3 | Mäh- und Förderrotor |
| 4 | Maschinengestell |
| 5 | Abteiler, Arbeitsbreitenbegrenzer bzw. Führungselement |
| 6 | Messerscheibe |
| 7 | Förderscheibe |
| 8 | Rotationsachse |
| 9 | Führungsfinger bzw. Führungselement |
| 10 | Vorderachse |
| 11 | Vorderräder |
| 12 | Hinterachse (Lenkräder) |
| 13 | Hinterräder |
| 14 | vertikale Längsmittelebene |
| 15 | Mäh- und Arbeitsbreite |
| 16 | Achsabstand |
| 17 | Konturlinie |
| 18 | Abstand |
| 19 | Kreisbogen (Kurvenbogen) |
| 20 | Verbindungslinie |
| 21 | aufrechte Scharnierachse |
| 22 | Vorsatzgerät Mittelteil |
| 23 | Vorsatzgerät äußerer Abschnitt |
| 24 | Vorsatzgerät äußerer Abschnitt |
| 25 | Maschinenrahmen Mittelteil |
| 26 | Maschinenrahmen Außenteil |
| 27 | Maschinenrahmen Außenteil |
| 28 | Sockel (Drehkranz) |
| 29 | Hebel |
| 30 | Schubstange |
| 31 | Gelenkpunkt |
| 32 | Stellantrieb (Hydraulikzylinder) |
| 33 | Konsole |
| 34 | Hebel |
| 35 | Gelenkpunkt |
| 36,36' | Stellantrieb (Hydraulikzylinder) |
| 37 | Gelenkpunkt |
| 38 | Konsole |
| 39 | Hebel |
| 40 | Fahrerkabine |
| 41 | Mikroprozessor |
| 42 | Eingänge Mikroprozessor |
| 43 | Ausgänge Mikroprozessor |
| 44 | Einschlagwinkelsensor |
| 45 | Einschlagwinkelsensor |
| 46 | Anstellwinkelsensor |
| 47 | Anstellwinkelsensor |
| 48 | Terminal |
| 49 | Hydraulikaggregat |
| 50 | Hydraulikpumpe |
| 51 | Antriebsmotor |
| 52 | Schwenkwinkelsensor |
| 53 | Förderstromsensor |
| 54 | Steuerventil |
| 55 | Drucksensor |
| 56 | Druckleitung |
| 57 | Stellantrieb |
| 58 | Wegeventil |
| 59 | Wegeventil |

| 60 | RAM-Speicher |
| 61 | Betriebsartenwahlschalter |
| 62 | Drehpotentiometer |
| 63 | Drehzahlsensor |
| 64 | Öltank |
| 65 | Tankrücklauf |

| 66 | Steuereinrichtung |
| 67 | Jobrechner |

| F | Fahrtrichtung |
| M | Momentanpol |
| P | Drehpol |
| $P_1$ | Schnittpunkt |
| $P_2$ | Schnittpunkt |
| P3 | Schnittpunkt |
| P4 | Drehpol |
| P5 | Drehpol |
| R | Momentanpolradius |
| R' | Radiuskomponente |
| R" | Radius |

| $\alpha$ | Anstellwinkel |
| $\beta$ | gemittelter Einschlagwinkel |
| $\beta'$ | Einschlagwinkel |
| $\beta"$ | Einschlagwinkel |
| $\gamma$ | Fahrtrichtungswinkel |
| $\delta$ | Winkeldifferenz |
| $\lambda$ | Anstellwinkel |

## Patentansprüche

1. Verfahren zum Betreiben eines Vorsatzgerätes (2) für den Anbau an Trägerfahrzeuge (1) wie Feldhäcksler oder Mähdrescher zum Ernten von stängeligem Erntegut, mit Bearbeitungswerkzeugen wie beispielsweise Mäh- und Förderrotore (3) oder Pflückeinheiten, denen Stängelführungselemente vor- und/oder teils vor und nebengelagert sind, wie beispielsweise Führungsfinger, Abteiler, Lagermaisschnecken, Teilerspitzen, wobei die Ausrichtung der Stängelführungselemente durch Verschenken um aufrechte Schwenkachsen verändert werden kann, **dadurch gekennzeichnet, dass** die Ausrichtung wenigstens eines Stängelführungselements (5,9) relativ zur Längsmittelebene (14) des Trägerfahrzeugs (1) durch die sensorischen Erfassung eines Radeinschlagwinkel ($\beta'$;$\beta"$) oder des Lenkwinkels der Fahrzeuglenkung des Trägerfahrzeugs (1) derart erfolgt, dass wenigstens ein Argument eines dieser Winkel einem Mikroprozessor (41) als Eingangssignal zugeführt wird, und der Mikroprozessor (41) ein Ausgangssignal zur Ansteuerung eines Aktors erzeugt, wodurch die Ausrichtung der Stängelführungselemente (5,9) im Sinne eines Regelkreises abhängig vom Lenkeinschlag der Fahrzeuglenkung verändert werden kann.

2. Vorrichtung zum Betreiben eines Vorsatzgerätes (2) für den Anbau an Trägerfahrzeuge (1) wie Feldhäcksler oder Mähdrescher zum Ernten von stängeligem Erntegut, mit Bearbeitungswerkzeugen wie beispielsweise Mäh- und Förderrotore (3) oder Pflückeinheiten, denen Stängelführungselemente vor- und/oder teils vor und nebengelagert sind, wie beispielsweise Führungsfinger, Abteiler, Lagermaisschnecken, Teilerspitzen, wobei die Ausrichtung der Stängelführungselemente durch Verschenken um aufrechte Schwenkachsen verändert werden kann, **dadurch gekennzeichnet, dass** die Vorrichtung eine Steuereinrichtung (66) zur Ausrichtung wenigstens eines Stängelführungselements (5,9) relativ zur Längsmittelebene (14) des Trägerfahrzeugs (1) eine sensorische Erfassung eines Radeinschlagwinkel ($\beta'$;$\beta"$) oder des Lenkwinkels der Fahrzeuglenkung des Trägerfahrzeugs umfasst derart, dass wenigstens ein Argument eines dieser Winkel einem Mikroprozessor (41) als Eingangssignal zugeführt wird, und der Mikroprozessor (41) ein Ausgangssignal zur Ansteuerung eines Aktors erzeugt.

3. Vorrichtung zum Betreiben eines Vorsatzgerätes (2) für den Anbau an Trägerfahrzeuge (1) wie Feldhäcksler oder Mähdrescher zum Ernten von stängeligem Erntegut, mit Bearbeitungswerkzeugen wie beispielsweise Mäh- und Förderrotore (3) oder Pflückeinheiten, denen Stängelführungselemente vor- und/oder teils vor und nebengelagert sind, wie beispielsweise Führungsfinger, Abteiler, Lagermaisschnecken, Teilerspitzen, wobei die Ausrichtung der Stängelführungselemente durch Verschenken um aufrechte Schwenkachsen verändert werden kann, **dadurch gekennzeichnet, dass** die Ausrichtung in Bezug auf die Längsmittelebene (14) mit einem Anstellwinkel ($\alpha$) durch eine relative Verdrehung des gesamte Vorsatzgeräts (2) um einen Drehpol (P) verändert werden kann.

4. Vorrichtung nach Anspruch 3, **dadurch gekennzeichnet, dass** die relative Verdrehung wenigstens zwei Drehvorgänge derart beinhaltet, dass einerseits das Vorsatzgerät (2) eine erste Verdrehung um einen Anstellwinkel ($\alpha$) und andererseits wenigstens ein Stängelführungselement (5;9) des Vorsatzgerätes (2) eine zweite Verdrehung um einen Anstellwinkel ($\gamma$) ausführen kann.

5. Vorrichtung nach einem oder mehreren der Ansprüche 2 bis 4, **dadurch gekennzeichnet, dass** der Betrag eines Anstellwinkels ($\alpha$ und/oder $\gamma$) abhängig vom Betrag des momentanen Kurvenradius (R) während der Kurvenfahrt des Trägerfahrzeugs (1) gesteuert werden kann.

6. Vorrichtung nach einem oder mehreren der Ansprüche 2 bis 5, **dadurch gekennzeichnet, dass** der Betrag eines Anstellwinkels ($\alpha$ und/oder $\gamma$) abhängig vom Betrag des Einschlagwinkels ($\beta'$ und/oder $\beta''$) der Lenkräder des Trägerfahrzeugs (1) gesteuert werden kann.

7. Vorrichtung nach einem oder mehreren der Ansprüche 2 bis 6, **dadurch gekennzeichnet, dass** wenigstens ein Lenkeinschlagswinkel ($\beta'\beta''$) der Lenkräder des Trägerfahrzeugs (1) von einem Drehwinkelsensor (44,45) messtechnisch erfasst und den Eingang (24) einem Mikroprozessors (41) als Eingangssignal zuführt, und daraus abgeleitet wenigstens ein Ausgangssignal zur Ansteuerung eines Stellantriebs (32,36,36') als Aktor zur Erzeugung eines Anstellwinkel ($\alpha,\gamma$) generiert wird.

8. Vorrichtung nach Anspruch 7, **dadurch gekennzeichnet, dass** der Stellantrieb (32,36,36') durch wenigstens einen Hydraulikzylinder erfolgt.

9. Vorrichtung nach Anspruch 7, **dadurch gekennzeichnet, dass** der Stellantrieb (36,36') durch Hydraulikzylinder ausgeführt als gekoppelte Gleichgangzylinder mit Gleichgangsteuerung erfolgt.

10. Vorrichtung nach einem oder mehreren der Ansprüche 2 bis 9, **dadurch gekennzeichnet, dass** die Steuereinrichtung (66) eines Anstellwinkels ($\alpha$ und/oder $\gamma$) Teil einer Lenksteuerung eines Trägerfahrzeugs (1) ist.

11. Vorrichtung nach einem oder mehreren der Ansprüche 2 bis 10, **dadurch gekennzeichnet, dass** die Steuereinrichtung (66) des Anstellwinkels ($\alpha$ und/oder $\gamma$) durch einen voreinstellbaren Betriebsmodus "Handsteuerung" oder "Automatiksteuerung" vorgegeben werden kann.

12. Vorrichtung nach einem oder mehreren der Ansprüche 2 bis 12, **dadurch gekennzeichnet, dass** die Steuereinrichtung (66) des Anstellwinkels ($\alpha$, $\gamma$) Teil einer automatischen Lenksteuerung eines Trägerfahrzeugs (1) ist.

13. Vorrichtung nach einem oder mehreren der Ansprüche 2 bis 13, **dadurch gekennzeichnet, dass** die Steuerung des Anstellwinkels ($\alpha$ und/oder $\gamma$) über ein manuell betätigbares Stellelement (62) als Teil der Steuereinrichtung (66) eines Trägerfahrzeugs (1) erfolgen kann.

14. Vorrichtung nach einem oder mehreren der Ansprüche 2 bis 13, **dadurch gekennzeichnet, dass** zumindest Teile von Steuerungskomponenten zur Steuerung des Anstellwinkels ($\alpha,\gamma$) sich an Bord eines Trägerfahrzeugs (1) befinden.

15. Vorrichtung nach einem oder mehreren der Ansprüche 2 bis 15, **dadurch gekennzeichnet, dass** zumindest einzelne Teile als Komponenten der Steuereinrichtung (66) dem Vorsatzgerät (2) zugeordnet sind.

16. Vorrichtung nach einem oder mehreren der Ansprüche 2 bis 15, **dadurch gekennzeichnet, dass** die Steuereinrichtung (66) einen Datenbus aufweist.

17. Vorrichtung nach einem oder mehreren der Ansprüche 2 bis 16 **dadurch gekennzeichnet, dass** die Steuereinrichtung (66) vorsatzgeräteseitig einen Jobrechner (67) aufweist.

18. Vorrichtung nach einem oder mehreren der Ansprüche 2 bis 17, **dadurch gekennzeichnet, dass** die Steuereinrichtung (66) und der Jobrechner (67) durch einen Datenbus miteinander kommunizieren.

19. Vorrichtung nach einem oder mehreren der Ansprüche 2 bis 18, **dadurch gekennzeichnet, dass** die Steuereinrichtung (66) eine loadsensing geregelte Hydraulikpumpe (50) aufweist.

20. Vorrichtung nach Anspruch 19 **dadurch gekennzeichnet, dass** die Hydraulikpumpe (50) Druck und/oder Förderstrom geregelt ist.

21. Vorrichtung nach einem oder mehreren der Ansprüche 2 bis 20, **dadurch gekennzeichnet, dass** die Steuereinrichtung (66) proportional geregelte Steuerventile (58,59), aufweist.

**Claims**

1. A method of operating a front-mounted implement (2) for attachment to carrier vehicles (1) such as forage harvesters or combine harvesters for harvesting stalk crops, having processing tools such as for example mowing and conveyor rotors (3) or picking units, in relation to which stalk guide elements are mounted upstream and/or in part upstream and beside, such as for example guide fingers, dividers, lager maize screws, divider tips, wherein the orientation of the stalk guide elements can be altered by pivotal movement about upright pivot axes, **characterised in that** the orientation of at least one stalk guide element (5, 9) relative to the longitudinal central plane (14) of the carrier vehicle (1) is effected by sensor detection of a wheel lock angle (β'; β") or the steering angle of the vehicle steering of the carrier vehicle (1) in such a way that at least one argument of one of those angles is fed to a microprocessor (41) as an input signal and the microprocessor (41) generates an output signal for actuation of an actuator whereby the orientation of the stalk guide elements (5, 9) can be altered in the sense of a regulating circle in dependence on the steering lock of the vehicle steering.

2. Apparatus for operating a front-mounted implement (2) for attachment to carrier vehicles (1) such as forage harvesters or combine harvesters for harvesting stalk crops, having processing tools such as for example mowing and conveyor rotors (3) or picking units, in relation to which stalk guide elements are mounted upstream and/or in part upstream and beside, such as for example guide fingers, dividers, lager maize screws, divider tips, wherein the orientation of the stalk guide elements can be altered by pivotal movement about upright pivot axes, **characterised in that** the apparatus includes a control device (66) for orientation of at least one stalk guide element (5, 9) relative to the longitudinal central plane (14) of the carrier vehicle (1) is effected by sensor detection of a wheel lock angle (β'; β") or the steering angle of the vehicle steering of the carrier vehicle (1) in such a way that at least one argument of one of those angles is fed to a microprocessor (41) as an input signal and the microprocessor (41) generates an output signal for actuation of an actuator.

3. Apparatus for operating a front-mounted implement (2) for attachment to carrier vehicles (1) such as forage harvesters or combine harvesters for harvesting stalk crops, having processing tools such as for example mowing and conveyor rotors (3) or picking units, in relation to which stalk guide elements are mounted upstream and/or in part upstream and beside, such as for example guide fingers, dividers, lager maize screws, divider tips, wherein the orientation of the stalk guide elements can be altered by pivotal movement about upright pivot axes, **characterised in that** the orientation can be altered in relation to the longitudinal central plane (14) with a setting angle (α) by a relative rotary movement of the entire front-mounted implement (2) about a centre of rotation (P).

4. Apparatus according to claim 3 **characterised in that** the relative rotary movement includes at least two rotary processes in such a way that on the one hand the front-mounted implement (2) can perform a first rotary movement about a setting angle (α) and on the other hand at least one stalk guide element (5; 9) of the front-mounted implement (2) can perform a second rotary movement about a setting angle (γ).

5. Apparatus according to one or more of claims 2 to 4 **characterised in that** the magnitude of a setting angle (α and/or γ) can be controlled in dependence on the magnitude of the instantaneous curve radius (R) during curve negotiation by the carrier vehicle (1).

6. Apparatus according to one or more of claims 2 to 5 **characterised in that** the magnitude of a setting angle (α and/or γ) can be controlled in dependence on the magnitude of the lock angle (β' and/or β") of the steering wheels of the carrier vehicle (1).

**7.** Apparatus according to one or more of claims 2 to 6 **characterised in that** at least one steering lock angle (β', β'') of the steering wheels of the carrier vehicle (1) is measuringly detected by a rotary angle sensor (44, 45) and fed as an input signal to the input (24) of a microprocessor (41) and derived therefrom at least one output signal is generated for actuation of an adjusting drive (32, 36, 36') as an actuator for producing a setting angle (α, γ).

**8.** Apparatus according to claim 7 **characterised in that** the adjusting drive (32, 36, 36') is effected by at least one hydraulic cylinder.

**9.** Apparatus according to claim 7 **characterised in that** the adjusting drive (36, 36') is effected by hydraulic cylinders in the form of coupled synchronous cylinders with synchronism control.

**10.** Apparatus according to one or more of claims 2 to 9 **characterised in that** the control device (66) of a setting angle (α and/or γ) is part of a steering control of a carrier vehicle (1).

**11.** Apparatus according to one or more of claims 2 to 10 **characterised in that** the control device (66) of the setting angle (α and/or γ) can be predetermined by a presettable operating mode 'manual control' or 'automatic control'.

**12.** Apparatus according to one or more of claims 2 to 12 **characterised in that** the control device (66) of the setting angle (α, γ) is part of an automatic steering control of a carrier vehicle (1).

**13.** Apparatus according to one or more of claims 2 to 13 **characterised in that** control of the setting angle (α and/or γ) can be effected by way of a manually actuable adjusting element (62) as part of the control device (66) of a carrier vehicle (1).

**14.** Apparatus according to one or more of claims 2 to 13 **characterised in that** at least parts of control components for control of the setting angle (α, β) are disposed on board a carrier vehicle (1).

**15.** Apparatus according to one or more of claims 2 to 14 **characterised in that** at least individual parts are associated as components of the control device (66) with the front-mounted implement (2).

**16.** Apparatus according to one or more of claims 2 to 15 **characterised in that** the control device (66) has a data bus.

**17.** Apparatus according to one or more of claims 2 to 16 **characterised in that** at the front-mounted implement side the control device (66) has a job computer (67).

**18.** Apparatus according to one or more of claims 2 to 17 **characterised in that** the control device (66) and the job computer (67) communicate with each other by a data bus.

**19.** Apparatus according to one or more of claims 2 to 18 **characterised in that** the control device (66) has a load-sensingly regulated hydraulic pump (50).

**20.** Apparatus according to claim 19 **characterised in that** the hydraulic pump (50) is regulated on pressure and/or delivery flow.

**21.** Apparatus according to one or more claims 2 to 20 **characterised in that** the control device (66) has proportionally regulated control valves (58, 59).

**Revendications**

**1.** Procédé pour actionner un outil frontal (2) à rapporter sur des véhicules porteurs (1) tels que des ensileuses ou des moissonneuses-batteuses aptes à récolter du produit de récolte en tiges, comprenant des outils de travail comme par exemple des rotors de coupe et d'amenée (3) ou des unités cueilleuses, devant lesquels et/ou en partie devant et à côté desquels sont disposés des éléments de guidage de tiges, comme par exemple des doigts de guidage, des diviseurs, des vis pour maïs versé, des pointes diviseuses, l'orientation des éléments de guidage de tiges pouvant être modifiée par un pivotement autour d'axes de pivotement verticaux, **caractérisé en ce que** l'orientation d'au moins un élément de guidage de tiges (5, 9) par rapport au plan médian longitudinal (14) du véhicule porteur (1) s'effectue par la détection, à l'aide de capteurs, d'un angle de braquage de roues (β'; β'') ou de l'angle de braquage de la direction de véhicule du véhicule porteur (1), de façon qu'au moins un argument d'un de ces angles soit envoyé comme signal d'entrée à un microprocesseur (41), et le microprocesseur (41) produit un signal de sortie pour commander un actionneur, ce qui permet de modifier l'orientation des éléments de guidage de tiges (5, 9) à la façon d'un circuit de régulation en fonction du braquage de la direction du véhicule.

2. Dispositif pour actionner un outil frontal (2) à rapporter sur des véhicules porteurs (1) tels que des ensileuses ou des moissonneuses-batteuses aptes à récolter du produit de récolte en tiges, comprenant des outils de travail comme par exemple des rotors de coupe et d'amenée (3) ou des unités cueilleuses, devant lesquels et/ou en partie devant et à côté desquels sont disposés des éléments de guidage de tiges, comme par exemple des doigts de guidage, des diviseurs, des vis pour maïs versé, des pointes diviseuses, l'orientation des éléments de guidage de tiges pouvant être modifiée par un pivotement autour d'axes de pivotement verticaux, **caractérisé en ce que** le dispositif comprend un dispositif de commande (66) pour l'orientation d'au moins un élément de guidage de tiges (5, 9) par rapport au plan médian longitudinal (14) du véhicule porteur (1), un moyen de détection par capteurs d'un angle de braquage de roues (β'; β") ou de l'angle de braquage de la direction de véhicule du véhicule porteur, de façon qu'au moins un argument d'un de ces angles soit envoyé comme signal d'entrée à un microprocesseur (41) et que le microprocesseur (41) produise un signal de sortie pour commander un actionneur.

3. Dispositif pour actionner un outil frontal (2) à rapporter sur des véhicules porteurs (1) tels que des ensileuses ou des moissonneuses-batteuses aptes à récolter du produit de récolte en tiges, comprenant des outils de travail comme par exemple des rotors de coupe et d'amenée (3) ou des unités cueilleuses, devant lesquels et/ou en partie devant et à côté desquels sont disposés des éléments de guidage de tiges, comme par exemple des doigts de guidage, des diviseurs, des vis pour maïs versé, des pointes diviseuses, l'orientation des éléments de guidage de tiges pouvant être modifiée par un pivotement autour d'axes de pivotement verticaux, **caractérisé en ce que** l'orientation par rapport au plan médian longitudinal (14) selon un angle d'incidence ($\alpha$) peut être modifiée par une rotation relative de l'ensemble de l'outil frontal (2) autour d'un pôle de rotation (P).

4. Dispositif selon la revendication 3, **caractérisé en ce que** la rotation relative comporte au moins deux opérations de rotation, de façon que, d'une part, l'outil frontal (2) puisse effectuer une première rotation autour d'un angle d'incidence ($\alpha$) et, d'autre part, au moins un élément de guidage de tiges (5 ; 9) de l'outil frontal (2) puisse effectuer une seconde rotation autour d'un angle d'incidence ($\gamma$).

5. Dispositif selon une ou plusieurs des revendications 2 à 4, **caractérisé en ce que** la valeur d'un angle d'incidence ($\alpha$ et/ou $\gamma$) peut être commandée en fonction de la valeur du rayon de virage instantané (R) durant la prise de virage du véhicule porteur (1).

6. Dispositif selon une ou plusieurs des revendications 2 à 5, **caractérisé en ce que** la valeur d'un angle d'incidence ($\alpha$ et/ou $\gamma$) peut être commandée en fonction de la valeur d'un angle de braquage (β' et/ou β") des roues directrices du véhicule porteur (1).

7. Dispositif selon une ou plusieurs des revendications 2 à 6, **caractérisé en ce qu'**au moins un angle de braquage de roues (β'β") des roues directrices du véhicule porteur (1) est détecté techniquement par un capteur d'angle de rotation (44, 45) et est envoyé à l'entrée (24) d'un microprocesseur (41) et, à partir de cette valeur, au moins un signal de sortie est produit pour commander un mécanisme de positionnement (32, 36, 36') conformé en actionneur pour créer un angle d'incidence ($\alpha$, $\gamma$).

8. Dispositif selon la revendication 7, **caractérisé en ce que** le mécanisme de positionnement (32, 36, 36') est constitué par au moins un vérin hydraulique.

9. Dispositif selon la revendication 7, **caractérisé en ce que** le mécanisme de positionnement (36, 36') conformé en vérins hydrauliques est constitué de vérins synchrones couplés à commande synchrone.

10. Dispositif selon une ou plusieurs des revendications 2 à 9, **caractérisé en ce que** le dispositif de commande (66) d'un angle d'incidence ($\alpha$ et/ou $\gamma$) fait partie d'une commande de direction d'un véhicule porteur (1).

11. Dispositif selon une ou plusieurs des revendications 2 à 10, **caractérisé en ce que** le dispositif de commande (66) de l'angle d'incidence ($\alpha$ et/ou $\gamma$) peut être prédéfini par l'intermédiaire d'un mode de fonctionnement préréglable « commande manuelle » ou « commande automatique ».

**12.** Dispositif selon une ou plusieurs des revendications 2 à 12, **caractérisé en ce que** le dispositif de commande (66) de l'angle d'incidence (α, γ) fait partie d'une commande de direction automatique d'un véhicule porteur (1).

**13.** Dispositif selon une ou plusieurs des revendications 2 à 13, **caractérisé en ce que** la commande de l'angle d'incidence (α et/ou γ) peut s'effectuer par l'intermédiaire d'un élément de positionnement actionnable manuellement (62) qui fait partie du dispositif de commande (66) d'un véhicule porteur (1).

**14.** Dispositif selon une ou plusieurs des revendications 2 à 13, **caractérisé en ce qu'**au moins des parties de composants de commande aptes à commander l'angle d'incidence (α, γ) se trouvent à bord du véhicule porteur (1).

**15.** Dispositif selon une ou plusieurs des revendications 2 à 15, **caractérisé en ce qu'**au moins des parties isolées sont associées à l'outil frontal (2) en tant que composants du dispositif de commande (66).

**16.** Dispositif selon une ou plusieurs des revendications 2 à 15, **caractérisé en ce que** le dispositif de commande (66) comporte un bus de données.

**17.** Dispositif selon une ou plusieurs des revendications 2 à 16, **caractérisé en ce que** le dispositif de commande (66) comporte, côté outil frontal), un calculateur de tâches (67).

**18.** Dispositif selon une ou plusieurs des revendications 2 à 17, **caractérisé en ce que** le dispositif de commande (66) et le calculateur de tâches (67) communiquent entre eux par l'intermédiaire d'un bus de données.

**19.** Dispositif selon une ou plusieurs des revendications 2 à 18, **caractérisé en ce que** le dispositif de commande (66) comporte une pompe hydraulique asservie à la charge (50).

**20.** Dispositif selon la revendication 19, **caractérisé en ce que** la pompe hydraulique (50) est régulée en pression et/ou en débit.

**21.** Dispositif selon une ou plusieurs des revendications. 2 à 20, **caractérisé en ce que** le dispositif de commande (66) comporte des valves de commande à régulation proportionnelle (58, 59).

Fig. 1

Fig. 2

Fig. 3

Fig. 3a

Fig. 4

Fig. 5

Fig. 5a

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19639805
- DE 10230238
- DE 10230236
- FR 2192443